# EUROPÄISCHE PATENTSCHRIFT

(11) **EP 2 875 709 B1**
(45) Veröffentlichungstag und Bekanntmachung des Hinweises auf die Patenterteilung: **23.05.2018**
(21) Anmeldenummer: 14185483.6
(22) Anmeldetag: 19.09.2014
(51) Int. Cl.: A01D 34/68

(54) **BEDIENVORRICHTUNG EINER GARTENBEARBEITUNGSMASCHINE**
OPERATING DEVICE OF A GARDENING MACHINE
DISPOSITIF DE COMMANDE D'UNE MACHINE DE JARDINAGE

(30) Priorität: 21.11.2013 DE 102013223800
(43) Veröffentlichungstag der Anmeldung: 27.05.2015
(73) Patentinhaber: ROBERT BOSCH GMBH, 70442 Stuttgart (DE)
(72) Erfinder: Koepf, Christian, Wherstead, IP92BA (GB); Quigley, Andrew, Matlock, Derbyshire, DE4 4LS (GB); Ling, Matthew, Ipswich Suffolk, IP6 8QR (GB)

(56) Entgegenhaltungen:
- DE-C1- 4 324 092
- US-A- 5 203 147

## Beschreibung

### Stand der Technik

Aus EP 1 285 568 A1 ist bereits eine Bedienvorrichtung einer Gartenbearbeitungsmaschine, insbesondere einer elektrisch betreibbaren Gartenbearbeitungsmaschine, bekannt, die eine Schalteinheit, welche einen elektrischen Schalter umfasst, und die eine Betätigungseinheit aufweist, welche ein beweglich gelagertes Betätigungselement zu einer Erzeugung einer Betätigungskraft zu einer Betätigung des Schalters umfasst.

Ferner sind auch aus der US 5 203 147 A und der DE 43 24 092 C1 derartige Bedienvorrichtungen bekannt.

### Offenbarung der Erfindung

Die Erfindung geht aus von einer Gartenbearbeitungsmaschinenach dem Oberbegriff des Anspruchs 1.

Es wird vorgeschlagen, dass das Betätigungselement entlang seiner Drehachse den zumindest einen elektrischen Schalter hülsenartig umgibt.

Bevorzugt ist der Schalter als mechanisch betätigbarer Schalter ausgebildet. Hierbei ist der Schalter vorzugsweise infolge einer Einwirkung der mittels einer Bewegung des Betätigungselements erzeugbaren Betätigungskraft mechanisch betätig bar. Es ist jedoch auch denkbar, dass der Schalter als magnetisch betätigbarer Schalter ausgebildet ist, wobei beispielsweise ein Magnetelement infolge der mittels einer Bewegung des Betätigungselements erzeugbaren Betätigungskraft bewegbar ist und somit den Schalter betätigen kann. Der Schalter ist hierbei bevorzugt als elektromechanischer Schalter ausgebildet. Der Schalter ist besonders bevorzugt als Mikroschalter ausgebildet. Es ist jedoch auch denkbar, dass der Schalter als elektronischer Schalter ausgebildet ist. Die Schalteinheit ist vorzugsweise mit einer Steuer- und/oder Regeleinheit der Gartenbearbeitungsmaschine zu einer Steuer- und/oder Regelung der Gartenbearbeitungsmaschine verbunden. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden.

Das Betätigungselement ist vorzugsweise drehbar gelagert. Bevorzugt ist das Betätigungselement drehbar entlang eines Winkelbereichs gelagert, der insbesondere kleiner ist als 360°, bevorzugt kleiner ist als 270° und besonders bevorzugt kleiner ist als 180°. Bevorzugt ist das Betätigungselement mit einem Bedienelement einer Bedieneinheit der Gartenbearbeitungsmaschine verbunden. Das Bedienelement ist insbesondere von einem Bediener zu einer Inbetriebnahme der Gartenbearbeitungsmaschine und/oder zu einer Einstellung zumindest einer Gartenbearbeitungsmaschinenfunktionskenngröße der Gartenbearbeitungsmaschine greifbar und bewegbar. Hierbei ist das Betätigungselement vorzugsweise drehfest mit dem Betätigungselement verbunden. Somit ist das Bedienelement bevorzugt mittels des Betätigungselements drehbar gelagert.

Die Kurvengetriebeeinheit ist besonders bevorzugt zumindest dazu vorgesehen, infolge einer durch eine Rotationsbewegung des Betätigungselements erzeugten Betätigungskraft eine mechanische Betätigung des Schalters zu bewirken. Hierbei ist die Kurvengetriebeeinheit bevorzugt zwischen dem Betätigungselement und dem Schalter angeordnet. Unter "vorgesehen" soll insbesondere speziell ausgelegt und/oder speziell ausgestattet verstanden werden. Darunter, dass ein Element und/oder eine Einheit zu einer bestimmten Funktion vorgesehen ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt. Mittels der erfindungsgemäßen Ausgestaltung der Bedienvorrichtung kann vorteilhaft ein komfortables Bedienen der Gartenbearbeitungsmaschine ermöglicht werden. Hierbei kann vorteilhaft mittels der Kurvengetriebeeinheit eine Übersetzung einer langen Bewegungsstrecke des Betätigungselements in eine kurze Betätigungsstrecke des Schalters realisiert werden. Somit kann vorteilhaft ein Mikroschalter eingesetzt werden, der einen geringen Bauraum benötigt. Daher kann die erfindungsgemäße Bedienvorrichtung vorteilhaft kompakt gehalten werden.

Des Weiteren wird vorgeschlagen, dass die Kurvengetriebeeinheit zumindest ein Kurvengetriebeelement umfasst, das am Betätigungselement angeordnet ist. Das Kurvengetriebeelement kann hierbei als Nocken oder als Kurvenbahn ausgebildet sein. Zudem kann das Kurvengetriebeelement mittels einer kraftschlüssigen, mittels einer formschlüssigen und/oder mittels einer stoffschlüssigen Verbindung am Betätigungselement fixiert sein. Es kann somit vorteilhaft eine besonders kompakte Ausgestaltung der erfindungsgemäßen Bedienvorrichtung erreicht werden.

Vorteilhafterweise ist das Kurvengetriebeelement als Kurvenbahn ausgebildet, die einteilig mit dem Betätigungselement ausgebildet ist. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Vorzugsweise ist das Kurvengetriebeelement an einer Innenseite des Betätigungselements angeformt. Es können vorteilhaft Montageaufwand, Montagekosten und separate Bauteile zu einer Fixierung des Kurvengetriebeelements am Betätigungselement eingespart werden.

Ferner wird vorgeschlagen, dass die Kurvengetriebeeinheit zumindest ein weiteres Kurvengetriebeelement umfasst, das zu einer Betätigung des Schalters mittels des Kurvengetriebeelements translatorisch beweglich ist. Bevorzugt liegt das weitere Kurvengetriebeelement am Kurvengetriebeelement an. Das weitere Kurvengetriebeelement ist besonders bevorzugt infolge einer Bewegung des durch das Betätigungselement bewegbaren Kurvengetriebeelements translatorisch in Richtung des Schalters bewegbar. Somit ist das weitere Kurvengetriebeelement vorzugsweise infolge einer Bewegung des Betätigungselements translatorisch bewegbar. Bevorzugt ist das weitere Kurvengetriebeelement entlang einer Bewegungsachse translatorisch beweglich gelagert, die zumindest im Wesentlichen quer, insbesondere zumindest im Wesentlichen senkrecht, zu einer Bewegungsachse, insbesondere zu einer Drehachse, des Betätigungselements beweglich gelagert ist. Unter "im Wesentlichen quer" soll hier insbesondere eine Ausrichtung einer Richtung und/oder einer Achse relativ zu einer Bezugsrichtung und/oder zu einer Bezugsachse verstanden werden, wobei die Ausrichtung der Richtung und/oder der Achse zumindest verschieden von einer zumindest im Wesentlichen parallelen Ausrichtung zur Bezugsrichtung und/oder zur Bezugsachse ist und insbesondere windschief oder senkrecht zur Bezugsrichtung und/oder zur Bezugsachse ist. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Mittels der erfindungsgemäßen Ausgestaltung der Bedienvorrichtung kann konstruktiv einfach eine Bewegung des Betätigungselements zu einer Betätigung des Schalters genutzt werden.

Zudem wird vorgeschlagen, dass die Betätigungseinheit zumindest ein Schalterbetätigungselement zu einer Betätigung eines Schaltkontaktelements des Schalters umfasst, das am weiteren Kurvengetriebeelement der Kurvengetriebeeinheit beweglich gelagert ist. Bevorzugt ist das Schalterbetätigungselement translatorisch beweglich gelagert. Eine Bewegungsachse des Schalterbetätigungselements verläuft vorzugsweise zumindest im Wesentlichen parallel zu einer Bewegungsachse des weiteren Kurvengetriebeelements. Besonders bevorzugt verläuft die Bewegungsachse des Schalterbetätigungselements koaxial zur Bewegungsachse des weiteren Kurvengetriebeelements. Mittels der erfindungsgemäßen Ausgestaltung kann konstruktiv einfach eine Übertragung einer durch eine Bewegung des Betätigungselements erzeugte Betätigungskraft zu einer Betätigung des Schalters genutzt werden. Zudem kann vorteilhaft eine kompakte Ausgestaltung der Bedienvorrichtung realisiert werden.

Des Weiteren wird vorgeschlagen, dass die Betätigungseinheit zumindest eine Überlastpräventionseinheit umfasst, mittels derer zumindest ein Überdrücken des Schaltkontaktelements des Schalters vermeidbar ist. Es kann vorteilhaft eine Beschädigung des Schalters infolge einer langen Bewegungsstrecke des Betätigungselements vorteilhaft vermieden werden. Somit kann eine komfortabel zu bedienende erfindungsgemäße Bedienvorrichtung erreicht werden, die vorteilhaft gegen eine Beschädigung infolge eines Überdrückens des Schaltkontaktelements gesichert ist. Zudem kann vorteilhaft mittels der Überlastpräventionseinheit sichergestellt werden, dass infolge einer Weg- und/oder Kraftübersetzung durch die Kurvengetriebeeinheit der Schalter schadenfrei bedienbar ist.

Ferner wird vorgeschlagen, dass die Überlastpräventionseinheit zumindest ein Federelement zu einer zumindest teilweisen Kompensation einer mittels einer Bewegung des Betätigungselements erzeugbaren Betätigungskraft umfasst. Unter einem "Federelement" soll insbesondere ein makroskopisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Das Federelement ist vorzugsweise als Schraubendruckfeder ausgebildet. Es ist jedoch auch denkbar, dass das Federelement eine andere, einem Fachmann als sinnvoll erscheinende Ausgestaltung aufweist, wie beispielsweise eine Ausgestaltung als Evolutfeder, als Schenkelfeder, als Tellerfeder usw. Mittels der erfindungsgemäßen Ausgestaltung der Bedienvorrichtung kann vorteilhaft eine konstruktiv einfach zu realisierende Sicherung gegen ein Überdrücken des Schalterkontaktelements erreicht werden. Somit kann vorteilhaft ein als Mikroschalter ausgebildeter Schalter in der Bedienvorrichtung genutzt werden, der infolge einer langen Bewegungsstrecke des Betätigungselements vorteilhaft gegen eine Beschädigung geschützt werden kann.

Zudem wird vorgeschlagen, dass das Federelement zwischen dem weiteren Kurvengetriebeelement und dem Schalterbetätigungselement angeordnet ist. Somit stützt sich das Federelement bevorzugt mit einem Ende am weiteren Kurvengetriebeelement ab. Zudem stützt sich das Federelement bevorzugt mit einem weiteren Ende am Schalterbetätigungselement ab. Somit wird das Schalterbetätigungselement vorzugsweise infolge einer durch eine Bewegung des weiteren Kurvengetriebeelements hervorgerufenen Komprimierung des Federelements zumindest bis zu einer Betätigung des Schalters bewegt. Mittels der erfindungsgemäßen Ausgestaltung kann vorteilhaft eine kompakte Anordnung der Überlastpräventionseinheit und somit eine kompakte Ausgestaltung der Bedienvorrichtung realisiert werden.

Des Weiteren wird vorgeschlagen, dass die Betätigungseinheit zumindest eine Sperreinheit umfasst, die zumindest ein Sperrelement aufweist, das in Abhängigkeit von einer Position des Sperrelements eine Schalterbetätigung verhindert. Es kann konstruktiv einfach eine Zweihandbedienbarkeit der Bedienvorrichtung realisiert werden. Somit kann vorteilhaft eine hohe Sicherheit gegen eine Fehlbedienung und/oder eine Verletzung eines Bedieners ermöglicht werden. Erfindungsgemäß wird eine Gartenbearbeitungsmaschine, insbesondere ein Rasenmäher, mit zumindest einer erfindungsgemäßen Bedienvorrichtung vorgeschlagen. Bevorzugt ist die Gartenbearbeitungsmaschine als Schieberasenmäher ausgebildet. Hierbei kann die Gartenbearbeitungsmaschine eine Antriebseinheit zu einer Unterstützung des Bedieners bei einem Schieben der Gartenbearbeitungsmaschine über eine zu bearbeitende Fläche aufweisen. Weitere, einem Fachmann als sinnvoll erscheinende Ausgestaltungen der Gartenbearbeitungsmaschine sind ebenfalls denkbar, wie beispielsweise eine Ausgestaltung der Gartenbearbeitungsmaschine als Rasentrimmer (Freischneider/Motorsense), als Laubbläser, als Kettensäge usw. Mittels der erfindungsgemäßen Ausgestaltung kann vorteilhaft ein hoher Bedienkomfort der Gartenbearbeitungsmaschine erreicht werden.

Die erfindungsgemäße Bedienvorrichtung und/oder die erfindungsgemäße Gartenbearbeitungsmaschine soll/sollen hierbei nicht auf die oben beschriebene Anwendung und Ausführungsform beschränkt sein. Insbesondere können/kann die erfindungsgemäße Bedienvorrichtung und/oder die erfindungsgemäße Gartenbearbeitungsmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Gartenbearbeitungsmaschine mit zu-mindest einer erfindungsgemäßen Bedienvorrichtung in einer schematischen Darstellung,
- Fig. 2: eine Detailansicht der erfindungsgemäßen Bedienvorrichtung in einer schematischen Darstellung,
- Fig. 3: eine Schnittansicht der erfindungsgemäßen Bedienvorrichtung in einer schematischen Darstellung,
- Fig. 4: eine Detailansicht einer Betätigungseinheit und einer Schalteinheit der erfindungsgemäßen Bedienvorrichtung in einer schema-tischen Darstellung und
- Fig. 5: eine Detailansicht einer alternativen erfindungsgemäßen Be-dienvorrichtung in einer schematischen Darstellung.

### Beschreibung der Ausführungsbeispiele

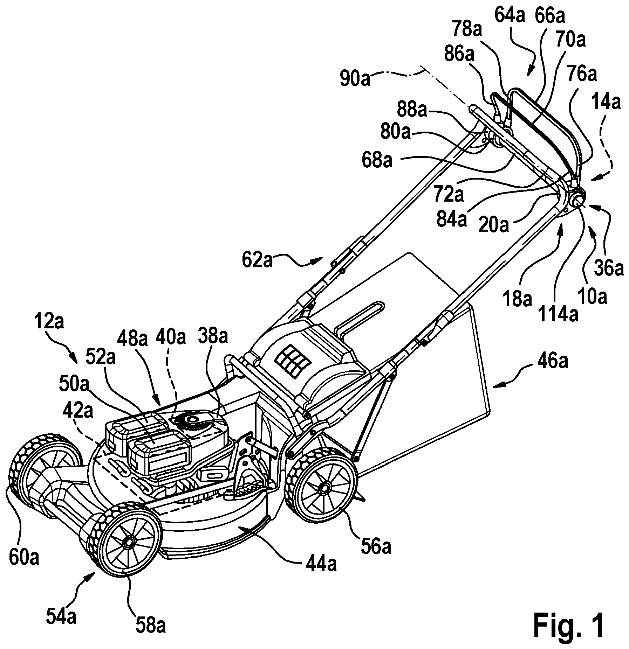

Figur 1 zeigt eine Gartenbearbeitungsmaschine 12a, die als Rasenmäher ausgebildet ist. Die Gartenbearbeitungsmaschine 12a ist hierbei als elektrisch betreibbarer Rasenmäher ausgebildet, der von einem Bediener vor sich her bewegbar ist. Somit ist die Gartenbearbeitungsmaschine 12a als sogenannter Schieberasenmäher ausgebildet. Die Gartenbearbeitungsmaschine 12a umfasst zumindest eine Bedienvorrichtung 10a zu einer Inbetriebnahme der Gartenbearbeitungsmaschine 12a und/oder zu einer Einstellung verschiedener Gartenbearbeitungsmaschinenfunktionskenngrößen der Gartenbearbeitungsmaschine 12a.

Ferner umfasst die Gartenbearbeitungsmaschine 12a zumindest eine Motorgehäuseeinheit 38a zu einer Aufnahme und zu einer Lagerung zumindest einer Elektromotoreinheit 40a der Gartenbearbeitungsmaschine 12a. Ferner umfasst die Gartenbearbeitungsmaschine 12a zumindest eine, einem Fachmann bereits bekannte Mähwerkeinheit 42a zu einer Bearbeitung einer Arbeitsfläche, insbesondere einer Grünfläche. Die Mähwerkeinheit 42a ist dazu vorgesehen, auf der Arbeitsfläche wachsendes Gras zu mähen. Hierzu ist die Mähwerkeinheit 42a von der Elektromotoreinheit 40a antreibbar. Die Mähwerkeinheit 42a kann hierbei direkt von der Elektromotoreinheit 40a antreibbar ausgebildet sein oder die Gartenbearbeitungsmaschine 12a umfasst zumindest eine Getriebeeinheit (hier nicht näher dargestellt), die mit der Elektromotoreinheit 40a und der Mähwerkeinheit 42a zusammenwirkt, insbesondere antriebstechnisch mit der Elektromotoreinheit 40a und der Mähwerkeinheit 42a verbunden ist. Die Getriebeeinheit kann in einer separaten Getriebegehäuseeinheit (hier nicht näher dargestellt) der Gartenbearbeitungsmaschine 12a oder in der Motorgehäuseeinheit 38a angeordnet sein.

Die Gartenbearbeitungsmaschine 12a umfasst ferner eine Abtragabtransporteinheit 44a, die einen Schneidraum umfasst, in dem ein, einem Fachmann bereits bekanntes Mähwerkzeug (hier nicht näher dargestellt) der Mähwerkeinheit 42a zu einem Schneiden von Gras antreibbar angeordnet ist. Die Mähwerkeinheit 42a ist somit im Schneidraum der Abtragabtransporteinheit 44a angeordnet. Der Schneidraum ist direkt angrenzend an eine Grasauswurföffnung der Abtragabtransporteinheit 44a angeordnet. Die Grasauswurföffnung mündet in eine abnehmbare Grasauffangvorrichtung 46a der Gartenbearbeitungsmaschine 12a zu einem Auffangen und/oder Sammeln von abgetragenem Grünschnitt, insbesondere von Gras.

Des Weiteren umfasst die Gartenbearbeitungsmaschine 12a zumindest eine Energiespeicherverbindungseinheit 48a zu einer lösbaren Verbindung mit zumindest einer Energiespeichereinheit 50a. Die Energiespeichereinheit 50a ist hierbei als Akkumulatoreinheit ausgebildet. Die Energiespeicherverbindungseinheit 48a ist an der Motorgehäuseeinheit 38a angeordnet. Hierbei weist die Energiespeicherverbindungseinheit 48a zumindest zwei als Verbindungsführungsschienen ausgebildete Schnittstellenelemente (hier nicht näher dargestellt) auf, die eine, einem Fachmann bereits bekannte Ausgestaltung aufweisen. Zudem umfasst die Energiespeicherverbindungseinheit 48a zumindest zwei Kontaktelemente (hier nicht näher dargestellt) zu einer elektrischen Verbindung mit Gegenkontaktelementen (hier nicht näher dargestellt) der Energiespeichereinheit 50a. Die Energiespeicherverbindungseinheit 48a umfasst ferner zumindest ein Fixierungselement (hier nicht näher dargestellt), das dazu vorgesehen ist, die Energiespeichereinheit 50a zumindest in einem an der Energiespeicherverbindungseinheit 48a angeordneten Zustand mittels einer formschlüssigen und/oder kraftschlüssigen Verbindung zu befestigen.

In der in Figur 1 dargestellten Ausgestaltung der Gartenbearbeitungsmaschine 12a ist die Energiespeicherverbindungseinheit 48a dazu vorgesehen, insgesamt zumindest zwei Energiespeichereinheiten 50a, 52a lösbar aufzunehmen. Zu einer Verbindung der Energiespeichereinheiten 50a, 52a mit der Energiespeicherverbindungseinheit 48a sind die Energiespeichereinheiten 50a, 52a jeweils auf die Schnittstellenelemente aufschiebbar oder in die Schnittstellenelemente einschiebbar. Hierbei verläuft eine Verbindungsrichtung, entlang der die Energiespeichereinheiten 50a, 52a aufschiebbar oder einschiebbar sind, zumindest im Wesentlichen quer zu einer Rotationsachse der Elektromotoreinheit 40a. Insbesondere verläuft die Verbindungsrichtung zumindest im Wesentlichen senkrecht zur Rotationsachse der Elektromotoreinheit 40a. Es ist jedoch auch denkbar, dass die Verbindungsrichtung entlang einer anderen, einem Fachmann als sinnvoll erscheinenden Richtung verläuft, wie beispielsweise entlang einer zumindest im Wesentlichen parallel zur Rotationsachse der Elektromotoreinheit 40a verlaufenden Richtung.

Zu einer Bewegung der Gartenbearbeitungsmaschine 12a auf einer Arbeitsfläche, insbesondere einer Grünfläche, weist die Gartenbearbeitungsmaschine 12a zumindest eine Fahrwerkseinheit 54a auf. Die Fahrwerkseinheit 54a umfasst hierbei zumindest zwei Antriebsräder 56a (in Figur 1 ist lediglich eines der zwei Antriebsräder 56a dargestellt), die mittels der Elektromotoreinheit 40a auf eine, einem Fachmann bereits bekannte Art und Weise antreibbar sind. Es ist jedoch auch denkbar, dass die Gartenbearbeitungsmaschine 12a zusätzlich zur Elektromotoreinheit 40a, mittels derer die Mähwerkeinheit 42a antriebbar ist, eine zusätzliche Elektromotoreinheit umfasst, mittels derer die Antriebsräder 56a antreibbar sind. In einer bevorzugten Ausgestaltung der Gartenbearbeitungsmaschine 12a umfasst die Gartenbearbeitungsmaschine 12a eine zusätzliche Elektromotoreinheit (hier nicht näher dargestellt), mittels deren die Antriebsräder 56a antreibbar sind. Zudem ist es denkbar, dass die Gartenbearbeitungsmaschine 12a eine Antriebsgetriebeeinheit (hier nicht näher dargestellt) umfasst, mittels derer eine Antriebsdrehzahl und/oder ein Antriebsdrehmoment der Antriebsräder 56a einstellbar sind/ist. Zudem ist eine Antriebswirkung der Antriebsräder 56a auf eine, einem Fachmann bereits bekannte Art und Weise zu- und/oder abschaltbar. Ferner umfasst die Fahrwerkseinheit 54a zumindest ein unangetriebenes Rotationsrad 58a, insbesondere zumindest zwei unangetriebene Rotationsräder 58a, 60a. Es ist jedoch auch denkbar, dass das Rotationsrad 58a, insbesondere die Rotationsräder 58a, 60a, ebenfalls mittels der Elektromotoreinheit 40a antreibbar ausgebildet sind.

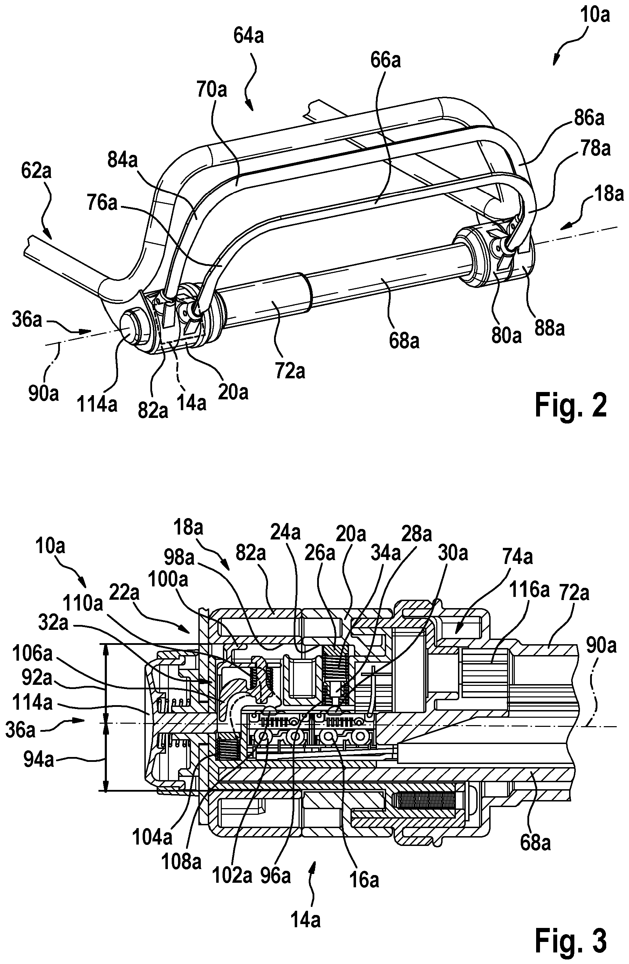

Figur 2 zeigt eine Detailansicht der Bedienvorrichtung 10a der Gartenbearbeitungsmaschine 12a. Die Bedienvorrichtung 10a der Gartenbearbeitungsmaschine 12a weist zumindest eine Schalteinheit 14a (Figur 3), die zumindest einen elektrischen Schalter 16a umfasst, und zumindest eine Betätigungseinheit 18a auf, die zumindest ein beweglich gelagertes Betätigungselement 20a zu einer Erzeugung einer Betätigungskraft zu einer Betätigung des Schalters 16a umfasst. Die Schalteinheit 14a ist zu einer Steuer- und/oder Regelung der Gartenbearbeitungsmaschine 12a elektrisch mit einer Steuer- und/oder Regeleinheit (hier nicht näher dargestellt) der Gartenbearbeitungsmaschine 12a verbunden. Die Bedienvorrichtung 10a ist an einer der Motorgehäuseeinheit 38a abgewandten Seite einer Lenkrohreinheit 62a der Gartenbearbeitungsmaschine 12a angeordnet. Die Lenkrohreinheit 62a weist hierbei eine, einem Fachmann bereits bekannte Ausgestaltung auf.

Die Bedienvorrichtung 10a umfasst ferner zumindest eine mit der Betätigungseinheit 18a zusammenwirkende Bedieneinheit 64a. Die Bedieneinheit 64a umfasst zumindest ein von einem Bediener der Gartenbearbeitungsmaschine 12a greifbares und betätigbares Bedienelement 66a. Das Bedienelement 66a ist zu einer Betätigung der Fahrwerkseinheit 54a vorgesehen, insbesondere zu einem Zu- und/oder Abschalten einer Antriebsleistung der Antriebsräder 56a. Hierbei ist das Bedienelement 66a als Bedienhebel ausgebildet, der mittels der Betätigungseinheit 18a drehbar an einer Querstange 68a der Lenkrohreinheit 62a gelagert ist. Das Bedienelement 66a weist eine U-förmige Ausgestaltung auf. Das Bedienelement 66a ist drehfest mit dem Betätigungselement 20a verbindbar. Das Betätigungselement 20a ist hülsenartig ausgebildet. Hierbei ist ein Schenkel 76a des Bedienelements 66a am Betätigungselement 20a befestigbar. Ein weiterer Schenkel 78a des Bedienelements 66a ist mit einem Lagerhülsenelement 80a der Betätigungseinheit 18a drehfest verbindbar. Das Lagerhülsenelement 80a ist drehbar an der Querstange 68a gelagert. Das Betätigungselement 20a ist an einem Ende der Querstange 68a angeordnet, das einem weiteren Ende der Querstange 68a abgewandt ist, an dem das Lagerhülsenelement 80a angeordnet ist.

Des Weiteren umfasst die Bedieneinheit 64a zumindest ein weiteres Bedienelement 70a, das von einem Bediener der Gartenbearbeitungsmaschine 12a greifbar und betätigbar ist. Das weitere Bedienelement 70a ist zu einer Bedienung der Mähwerkeinheit 42a vorgesehen. Somit ist die Mähwerkeinheit 42a infolge einer Betätigung des weiteren Bedienelements 70a an- und/oder abschaltbar. Das weitere Bedienelement 70a ist als Bedienhebel ausgebildet, der mittels der Betätigungseinheit 18a drehbar an der Querstange 68a der Lenkrohreinheit 62a gelagert ist. Hierbei weist das Bedienelement 70a eine U-förmige Ausgestaltung auf. Das weitere Bedienelement 70a ist drehfest mit einem weiteren Betätigungselement 82a der Betätigungseinheit 18a verbindbar. Das weitere Betätigungselement 82a ist hülsenartig ausgebildet. Hierbei ist ein Schenkel 84a des weiteren Bedienelements 70a am weiteren Betätigungselement 82a befestigbar. Ein weiterer Schenkel 86a des weiteren Bedienelements 70a ist mit einem weiteren Lagerhülsenelement 88a der Betätigungseinheit 18a drehfest verbindbar. Das weitere Lagerhülsenelement 88a ist drehbar an der Querstange 68a gelagert. Das weitere Betätigungselement 82a ist an einem Ende der Querstange 68a angeordnet, das einem weiteren Ende der Querstange 68a abgewandt ist, an dem das weitere Lagerhülsenelement 88a angeordnet ist.

Zudem umfasst die Bedieneinheit 64a zumindest ein Geschwindigkeitsbedienelement 72a, das zu einer Einstellung einer Fahrgeschwindigkeit der Gartenbearbeitungsmaschine 12a vorgesehen ist. Das Geschwindigkeitsbedienelement 72a ist drehbar an der Querstange 68a der Lenkrohreinheit 62a gelagert. Hierbei ist das Geschwindigkeitsbedienelement 72a motorradhandgriffartig ausgebildet. Zu einer Umsetzung einer Drehbewegung des Geschwindigkeitsbedienelements 72a in ein elektrisches Signal zu einer Einstellung einer Fahrgeschwindigkeit der Gartenbearbeitungsmaschine 12a umfasst die Schalteinheit 14a zumindest eine Potentiometereinheit 74a (Figur 3). Die Potentiometereinheit 74a ist in der Querstange 68a angeordnet. Hierbei ist das Geschwindigkeitsbedienelement 72a mittels eines Zahnradelements 116a der Potentiometereinheit 74a mit der Potentiometereinheit 74a verbunden. Das Zahnradelement 116a greift in eine Innenverzahnung des Geschwindigkeitsbedienelements 72a ein. Somit ist eine Drehbewegung des Geschwindigkeitsbedienelements 72a auf eine, einem Fachmann bereits bekannte Art und Weise in ein elektrisches Signal zu einer Einstellung einer Fahrgeschwindigkeit der Gartenbearbeitungsmaschine 12a umwandelbar.

Figur 3 zeigt eine Schnittansicht der Bedienvorrichtung 10a. Hierbei ist die Schalteinheit 14a und die Betätigungseinheit 18a im Schnitt dargestellt. Die Betätigungseinheit 18a umfasst zumindest eine Kurvengetriebeeinheit 22a, mittels derer eine Bewegung des Betätigungselements 20a zu einer Betätigung des Schalters 16a nutzbar ist. Der Schalter 16a ist hierbei zu einem Öffnen und/oder zu einem Schließen eines Stromkreises zu einem Zu- und/oder Abschalten der Antriebsleistung der Antriebsräder 56a vorgesehen. Hierzu umfasst die Kurvengetriebeeinheit 22a zumindest ein Kurvengetriebeelement 24a, das am Betätigungselement 20a angeordnet ist. Das Kurvengetriebeelement 24a ist an einer Innenseite des Betätigungselements 20a angeordnet. Die Innenseite des Betätigungselements 20a ist einer Seite des Betätigungselements 20a abgewandt, an der das Bedienelement 66a drehfest mit dem Betätigungselement 20a verbindbar ist. Das Kurvengetriebeelement 24a ist hierbei als Kurvenbahn ausgebildet, die einteilig mit dem Betätigungselement 20a ausgebildet ist. Somit weist das Kurvengetriebeelement 24a, insbesondere eine Kurvenbahnfläche des Kurvengetriebeelements 24a, entlang einer Umfangsrichtung einen sich verändernden Abstand zu einer Rotationsachse 90a des Betätigungselements 20a auf. In Figur 3 sind zur Verdeutlichung des sich entlang der Umfangsrichtung verändernden Abstands des Kurvengetriebeelements 24a, insbesondere der Kurvenbahnfläche relativ zur Rotationsachse 90a des Betätigungselements 20a, zwei Strecken 92a, 94a dargestellt, wobei die Strecke 92a länger ist als die Strecke 94a. Ein Abstand des Kurvengetriebeelements 24a relativ zur Rotationsachse 90a des Betätigungselements 20a ändert sich somit, betrachtet von einem außerhalb des Betätigungselements 20a angeordneten Fixpunkt, infolge einer Drehbewegung des Betätigungselements 20a um die Rotationsachse 90a.

Die Kurvengetriebeeinheit 22a umfasst zumindest ein weiteres Kurvengetriebeelement 26a, das zu einer Betätigung des Schalters 16a mittels des Kurvengetriebeelements 24a translatorisch beweglich ist. Das weitere Kurvengetriebeelement 26a ist translatorisch beweglich in einem Schaltgehäuse der Schalteinheit 14a gelagert. Das weitere Kurvengetriebeelement 26a ist hierbei stößelartig ausgebildet. Die Kurvengetriebeeinheit 22a umfasst ferner zumindest ein Federelement 96a, das dazu vorgesehen ist, das weitere Kurvengetriebeelement 26a mit einer Federkraft in Richtung des Kurvengetriebeelements 24a zu beaufschlagen. Somit wird das weitere Kurvengetriebeelement 26a mittels des Federelements 96a der Kurvengetriebeeinheit 22a an das Kurvengetriebeelement 24a, insbesondere an die Kurvenbahnfläche des Kurvengetriebeelements 24a, angedrückt. Das weitere Kurvengetriebeelement 26a ist somit infolge einer Drehbewegung des Betätigungselements 20a in Richtung des Schalters 16a bewegbar.

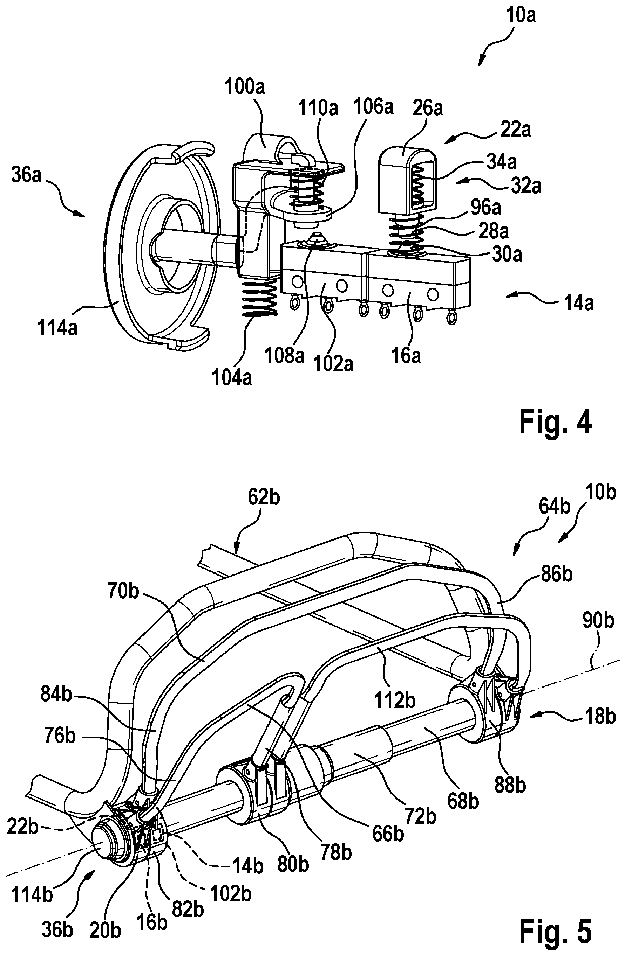

Die Betätigungseinheit 18a umfasst ferner zumindest ein Schalterbetätigungselement 28a zu einer Betätigung eines Schaltkontaktelements 30a des Schalters 16a, das am weiteren Kurvengetriebeelement 26a der Kurvengetriebeeinheit 22a beweglich gelagert ist. Das Schalterbetätigungselement 28a ist hierbei in dem weiteren Kurvengetriebeelement 26a angeordnet und im weiteren Kurvengetriebeelement 26a beweglich gelagert (siehe auch Figur 4). Eine Bewegung des Schalterbetätigungselement 28a zu einer Betätigung des Schaltkontaktelements 30a des Schalters 16a ist infolge einer Bewegung des weiteren Kurvengetriebeelements 26a in Richtung des Schalters 16a erzeugbar.

Des Weiteren umfasst die Betätigungseinheit 18a zumindest eine Überlastpräventionseinheit 32a, mittels derer zumindest ein Überdrücken des Schaltkontaktelements 30a des Schalters 16a vermeidbar ist. Hierzu umfasst die Überlastpräventionseinheit 32a zumindest ein Federelement 34a zu einer zumindest teilweisen Kompensation einer mittels einer Bewegung des Betätigungselements 20a erzeugbaren Betätigungskraft. Das Federelement 34a der Überlastpräventionseinheit 32a ist zwischen dem weiteren Kurvengetriebeelement 24a und dem Schalterbetätigungselement 28a angeordnet. Somit ist das Federelement 34a der Überlastpräventionseinheit 32a im weiteren Kurvengetriebeelement 26a angeordnet. Hierbei stützt sich das Federelement 34a der Überlastpräventionseinheit 32a mit einem Ende am weiteren Kurvengetriebeelement 24a ab und mit einem weiteren Ende stützt sich das Federelement 34a der Überlastpräventionseinheit 32a am Schalterbetätigungselement 28a ab. Somit ist eine Bewegung des weiteren Kurvengetriebeelements 24a in Richtung des Schalters 16a über das Federelement 34a der Überlastpräventionseinheit 32a an das Schalterbetätigungselement 28a übertragbar. Bei einer Bewegung des weiteren Kurvengetriebeelements 24a in Richtung des Schalters 16a wirkt das weitere Kurvengetriebeelement 24a zuerst auf das Federelement 34a der Überlastpräventionseinheit 32a und auf das Federelement 96a der Kurvengetriebeeinheit 22a, bevor das Schalterbetätigungselement 28a zu einer Betätigung eines Schaltkontaktelements 30a des Schalters 16a in Richtung des Schalters 16a bewegbar ist. Nach einer Betätigung des Schaltkontaktelements 30a des Schalters 16a durch das Schalterbetätigungselement 28a ist eine weitere Bewegung des weiteren Kurvengetriebeelements 24a in Richtung des Schalters 16a mittels des Federelements 34a der Überlastpräventionseinheit 32a kompensierbar. Somit kann vorteilhaft ein Überdrücken bzw. ein Eindrücken des Schalters 16a infolge einer langen Bewegungsstrecke des weiteren Kurvengetriebeelements 24a, die durch eine lange Drehstrecke des Betätigungselements 20a erzeugbar ist, vermieden werden.

Ferner ist mittels der Kurvengetriebeeinheit 22a eine Bewegung des weiteren Betätigungselements 82a zu einer Betätigung eines weiteren Schalters 102a der Schalteinheit 14a nutzbar. Der weitere Schalter 16a ist hierbei zu einem Öffnen und/oder zu einem Schließen eines Stromkreises zu einem An- und/oder Abschalten der Mähwerkeinheit 42a vorgesehen. Hierzu umfasst die Kurvengetriebeeinheit 22a zumindest ein zusätzliches Kurvengetriebeelement 98a, das am weiteren Betätigungselement 82a angeordnet ist. Das zusätzliche Kurvengetriebeelement 98a ist an einer Innenseite des weiteren Betätigungselements 82a angeordnet. Die Innenseite des weiteren Betätigungselements 82a ist einer Seite des weiteren Betätigungselements 82a abgewandt, an der das weitere Bedienelement 70a drehfest mit dem weiteren Betätigungselement 82a verbindbar ist. Das zusätzliche Kurvengetriebeelement 98a ist hierbei als Kurvenbahn ausgebildet, die einteilig mit dem weiteren Betätigungselement 82a ausgebildet ist. Somit weist das zusätzliche Kurvengetriebeelement 98a, insbesondere eine Kurvenbahnfläche des zusätzlichen Kurvengetriebeelements 98a, entlang einer Umfangsrichtung einen sich verändernden Abstand zur Rotationsachse des weiteren Betätigungselements 82a auf. Die Rotationsachse des weiteren Betätigungselements 82a verläuft hierbei koaxial zur Rotationsachse 90a des Betätigungselements 20a.

Die Kurvengetriebeeinheit 22a umfasst zumindest ein weiteres zusätzliches Kurvengetriebeelement 100a, das zu einer Betätigung des weiteren Schalters 102a mittels des zusätzlichen Kurvengetriebeelements 98a translatorisch beweglich ist. Das weitere zusätzliche Kurvengetriebeelement 100a ist translatorisch beweglich im Schaltgehäuse der Schalteinheit 14a gelagert. Das weitere zusätzliche Kurvengetriebeelement 100a ist hierbei stößelartig ausgebildet. Die Kurvengetriebeeinheit 22a umfasst ferner zumindest ein weiteres Federelement 104a, das dazu vorgesehen ist, das weitere zusätzliche Kurvengetriebeelement 100a mit einer Federkraft in Richtung des zusätzlichen Kurvengetriebeelements 98a zu beaufschlagen. Somit wird das weitere zusätzliche Kurvengetriebeelement 100a mittels des weiteren Federelements 104a der Kurvengetriebeeinheit 22a an das zusätzliche Kurvengetriebeelement 98a, insbesondere an die Kurvenbahnfläche des zusätzlichen Kurvengetriebeelements 98a, angedrückt. Das weitere zusätzliche Kurvengetriebeelement 100a ist somit infolge einer Drehbewegung des weiteren Betätigungselements 82a in Richtung des weiteren Schalters 102a bewegbar.

Die Betätigungseinheit 18a umfasst ferner zumindest ein weiteres Schalterbetätigungselement 106a zu einer Betätigung eines Schaltkontaktelements 108a des weiteren Schalters 102a, das am weiteren zusätzlichen Kurvengetriebeelement 100a der Kurvengetriebeeinheit 22a beweglich gelagert ist. Das weitere Schalterbetätigungselement 106a ist hierbei in dem weiteren zusätzlichen Kurvengetriebeelement 100a angeordnet und im weiteren zusätzlichen Kurvengetriebeelement 100a beweglich gelagert (siehe auch Figur 4). Eine Bewegung des weiteren Schalterbetätigungselements 106a zu einer Betätigung des weiteren Schaltkontaktelements 108a des weiteren Schalters 102a ist infolge einer Bewegung des weiteren zusätzlichen Kurvengetriebeelements 100a in Richtung des weiteren Schalters 102 erzeugbar. Das weitere Schalterbetätigungselement 106a ist translatorisch beweglich und schwenkbar relativ zum weiteren zusätzlichen Kurvengetriebeelement 100a am weiteren zusätzlichen Kurvengetriebeelement 100a gelagert. Zu einer Sicherung gegen ein Herausfallen aus dem weiteren zusätzlichen Kurvengetriebeelement 100a weist das weitere Schalterbetätigungselement 106a zumindest einen Sicherungsfortsatz auf, der zu einer formschlüssigen und/oder kraftschlüssigen Sicherung des weiteren Schalterbetätigungselements 106a am weiteren zusätzlichen Kurvengetriebeelement 100a vorgesehen ist.

Des Weiteren umfasst die Überlastpräventionseinheit 32a zumindest ein weiteres Federelement 110a zu einer zumindest teilweisen Kompensation einer mittels einer Bewegung des weiteren Betätigungselements 82a erzeugbaren Betätigungskraft. Das weitere Federelement 110a der Überlastpräventionseinheit 32a ist zwischen dem weiteren zusätzlichen Kurvengetriebeelement 100a und dem weiteren Schalterbetätigungselement 106a angeordnet. Hierbei stützt sich das weitere Federelement 110a der Überlastpräventionseinheit 32a mit einem Ende am weiteren zusätzlichen Kurvengetriebeelement 100a ab und mit einem weiteren Ende stützt sich das weitere Federelement 34a der Überlastpräventionseinheit 32a am weiteren Schalterbetätigungselement 106a ab. Somit ist eine Bewegung des weiteren Kurvengetriebeelements 24a in Richtung des Schalters 16a über das weitere Federelement 110a der Überlastpräventionseinheit 32a an das weitere Schalterbetätigungselement 106a übertragbar. Bei einer Bewegung des weiteren zusätzlichen Kurvengetriebeelements 24a in Richtung des weiteren Schalters 102a wirkt das weitere zusätzliche Kurvengetriebeelement 100a zuerst auf das weitere Federelement 110a der Überlastpräventionseinheit 32a und auf das weitere Federelement 104a der Kurvengetriebeeinheit 22a, bevor das weitere Schalterbetätigungselement 106a zu einer Betätigung des Schaltkontaktelements 108a des weiteren Schalters 102a in Richtung des weiteren Schalters 102a bewegbar ist. Nach einer Betätigung des Schaltkontaktelements 108a des weiteren Schalters 102a durch das weitere Schalterbetätigungselement 106a ist eine weitere Bewegung des weiteren zusätzlichen Kurvengetriebeelements 100a in Richtung des weiteren Schalters 102a mittels des weiteren Federelements 110a der Überlastpräventionseinheit 32a kompensierbar. Somit kann vorteilhaft ein Überdrücken bzw. ein Eindrücken des weiteren Schalters 102a infolge einer langen Bewegungsstrecke des weiteren zusätzlichen Kurvengetriebeelements 100a, die durch eine lange Drehstrecke des weiteren Betätigungselements 82a erzeugbar ist, vermieden werden.

Die Betätigungseinheit 18a umfasst zumindest eine Sperreinheit 36a, die zumindest ein Sperrelement 114a aufweist, das in Abhängigkeit von einer Position des Sperrelements 114a eine Schalterbetätigung verhindert. Hierbei ist das Sperrelement 114a dazu vorgesehen, in Abhängigkeit von einer Position des Sperrelements 114a eine Schalterbetätigung des weiteren Schalters 102a zu vermeiden (Figuren 3 und 4). Somit kann vorteilhaft eine Zweihandbedienung einer Inbetriebnahme der Mähwerkeinheit 42a realisiert werden. Das Sperrelement 114a ist translatorisch beweglich gelagert. Eine Bewegungsachse des Sperrelements 114a verläuft koaxial zur Rotationsachse 90a des Betätigungselements 20a. Das Sperrelement 114a umfasst zu einer Bewegung des weiteren Schalterbetätigungselements 106a in eine Schalterbetätigungsposition zumindest einen Betätigungsfortsatz. Somit ist das weitere Schalterbetätigungselement 106a infolge einer Bewegung des Sperrelements 114a in eine Schalterbetätigungsposition schwenkbar, in der eine Betätigung des Schaltkontaktelements 108a des weiteren Schalters 102a mittels des Schalterbetätigungselements 106a möglich ist. In einer Sperrposition des Schalterbetätigungselements 106a ist eine Betätigung des Schaltkontaktelements 108a des weiteren Schalters 102a infolge einer durch eine Drehbewegung des weiteren Betätigungselements 82a hervorgerufene Bewegung des Schalterbetätigungselements 106a gesperrt. Zu einer Betätigung des weiteren Schalters 102a wird somit entweder zuerst das weitere Betätigungselement 82a betätigt und anschließend das Sperrelement 114a betätigt oder es wird zuerst das Sperrelement 114a betätigt und anschließend das weitere Betätigungselement 82a betätigt (in Figur 3 ist das Schalterbetätigungselement 106a gestrichelt in einer Schalterbetätigungsposition dargestellt, in der der weitere Schalter 102a mittels des Schalterbetätigungselements 106a betätigt ist).

Figur 5 zeigt ein weiteres Ausführungsbeispiel der Erfindung. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In dem Ausführungsbeispiel der Figur 5 ist der Buchstabe a durch den Buchstaben b ersetzt.

In der Figur 5 ist eine alternative Ausgestaltung einer Bedienvorrichtung 10b dargestellt. Die Bedienvorrichtung 10b weist zumindest eine Schalteinheit 14b, die zumindest einen elektrischen Schalter 16b umfasst, und zumindest eine Betätigungseinheit 18b auf, die zumindest ein beweglich gelagertes Betätigungselement 20b zu einer Erzeugung einer Betätigungskraft zu einer Betätigung des Schalters 16b umfasst. Die Betätigungseinheit 18b umfasst zumindest eine Kurvengetriebeeinheit 22b, mittels derer eine Bewegung des Betätigungselements 20b zu einer Betätigung des Schalters 16b nutzbar ist. Die Bedienvorrichtung 10b weist somit eine zumindest im Wesentlichen analoge Ausgestaltung zu der in der Beschreibung der Figuren 1 bis 4 beschriebenen Bedienvorrichtung 10a auf. Ein Unterschied der in Figur 5 dargestellten Bedienvorrichtung 10b zu der in der Beschreibung der Figuren 1 bis 4 beschriebenen Bedienvorrichtung 10a liegt in der Ausgestaltung einer mit der Betätigungseinheit 18b zusammenwirkenden Bedieneinheit 64b der in Figur 5 dargestellten Bedienvorrichtung 10b. Die Bedieneinheit 64b umfasst zumindest zwei von einem Bediener greifbare und betätigbare Bedienelemente 66b, 112b, die zu einer Betätigung einer Fahrwerkseinheit einer Gartenbearbeitungsmaschine (hier nicht näher dargestellt) vorgesehen sind, insbesondere zu einem Zu- und/oder Abschalten einer Antriebsleistung der Fahrwerkseinheit. Eine Bedieneinheit 64a der in der Beschreibung der Figuren 1 bis 4 beschriebenen Bedienvorrichtung 10a umfasst zum Vergleich lediglich ein Bedienelement 66a zu einer Betätigung einer Fahrwerkseinheit.

Die Bedienelemente 66b, 112b der Bedieneinheit 64b der in Figur 5 dargestellten Bedienvorrichtung 10b sind jeweils als Bedienhebel ausgebildet, die mittels der Betätigungseinheit 18b drehbar an einer Querstange 68b einer Lenkrohreinheit 62b der Gartenbearbeitungsmaschine gelagert sind. Die Bedienelemente 66b, 112b sind U-förmig ausgebildet. Somit sind die Bedienelemente 66b, 112b jeweils mit zwei Schenkeln mittels der Betätigungseinheit 18b drehbar an der Querstange 68b gelagert. Hierbei ist eines der Bedienelemente 66b, 112b zu einer Betätigung mit einer linken Hand eines Bedieners vorgesehen und eines der Bedienelemente 66b, 112b ist zu einer Betätigung mit einer rechten Hand eines Bedieners vorgesehen. Somit kann ein Bediener komfortabel ein weiteres Bedienelement 70b zu einer Bedienung einer Mähwerkeinheit der Gartenbearbeitungsmaschine mit einer Hand betätigen und eines der Bedienelemente 66b, 112b mit einer weiteren Hand betätigen. Ein Einklemmen von Fingern einer Hand des Bedieners kann somit vorteilhaft vermieden werden. Den Bedienelementen 66b, 112b ist jeweils ein Schalter (hier nicht näher dargestellt) der Schalteinheit 14b zugewiesen, die mittels einer ODER-Schaltung miteinander in einem Stromkreis angeordnet sind. Somit kann vorteilhaft eine Inbetriebnahme der Fahrwerkeinheit mittels einer Betätigung lediglich eines der Bedienelemente 66b, 112b erreicht werden. Hinsichtlich weiterer Merkmale und Funktionen der Bedienvorrichtung 10b darf auf die Beschreibung der in den Figuren 1 bis 4 dargestellten Bedienvorrichtung 10a verwiesen werden.

## Patentansprüche

1. Gartenbearbeitungsmaschine, insbesondere Rasenmäher, mit zumindest einer Schalteinheit (14a; 14b), die zumindest einen elektrischen Schalter (16a; 16b) umfasst, und mit zumindest einer Betätigungseinheit (18a; 18b), die zumindest ein beweglich gelagertes Betätigungselement (20a; 20b) zu einer Erzeugung einer Betätigungskraft zu einer Betätigung des Schalters (16a; 16b) umfasst, wobei die Betätigungseinheit (18a; 18b) zumindest eine Kurvengetriebeeinheit (22a; 22b) umfasst, mittels derer eine Bewegung des Betätigungselements (20a; 20b) zu einer Betätigung des Schalters (16a; 16b) nutzbar ist, **dadurch gekennzeichnet, dass** das Betätigungselement (20a, 20b) entlang seiner Drehachse (90a, 90b) den zumindest einen elektrischen Schalter (16a; 16b) hülsenartig umgibt.

2. Gartenbearbeitungsmaschine nach Anspruch 1, **dadurch gekennzeichnet, dass** die Kurvengetriebeeinheit (22a; 22b) zumindest ein Kurvengetriebeelement (24a) umfasst, das am Betätigungselement (20a; 20b), angeordnet ist.

3. Gartenbearbeitungsmaschine nach Anspruch 2, **dadurch gekennzeichnet, dass** das Kurvengetriebeelement (24a) als Kurvenbahn ausgebildet ist, die einteilig mit dem Betätigungselement (20a; 20b) ausgebildet ist.

4. Gartenbearbeitungsmaschine nach Anspruch 2 oder 3, **dadurch gekennzeichnet, dass** die Kurvengetriebeeinheit (22a; 22b) zumindest ein weiteres Kurvengetriebeelement (26a) umfasst, das zu einer Betätigung des Schalters (16a; 16b) mittels des Kurvengetriebeelements (24a) translatorisch beweglich ist.

5. Gartenbearbeitungsmaschine nach Anspruch 4, **dadurch gekennzeichnet, dass** das weitere Kurvengetriebeelement (26a) entlang einer Bewegungsachse translatorisch beweglich gelagert ist, die zumindest im Wesentlichen quer, insbesondere zumindest im Wesentlichen senkrecht, zu der Drehachse (90a, 90b), des Betätigungselements (20a, 20b) beweglich gelagert ist.

6. Gartenbearbeitungsmaschine nach einem der vorhergehenden Ansprüche, **dadurch gekennzeichnet, dass** die Betätigungseinheit (18a; 18b) zumindest ein Schalterbetätigungselement (28a) zu einer Betätigung eines Schaltkontaktelements (30a) des Schalters (16a; 16b) umfasst, das an einem weiteren Kurvengetriebeelement (26a) der Kurvengetriebeeinheit (22a; 22b) beweglich gelagert ist.

7. Gartenbearbeitungsmaschine nach einem der vorhergehenden Ansprüche, **dadurch gekennzeichnet, dass** die Betätigungseinheit (18a; 18b) zumindest eine Überlastpräventionseinheit (32a; 32b) umfasst, mittels derer zumindest ein Überdrücken eines Schaltkontaktelements (30a) des Schalters (16a; 16b) vermeidbar ist, wobei die Überlastpräventionseinheit (32a) zumindest ein Federelement (34a) zu einer zumindest teilweisen Kompensation einer mittels einer Bewegung des Betätigungselements (20a; 20b) erzeugbaren Betätigungskraft umfasst.

8. Gartenbearbeitungsmaschine nach einem der vorhergehenden Ansprüche, **dadurch gekennzeichnet, dass** die Betätigungseinheit (18a; 18b) zumindest eine Sperreinheit (36a; 36b) umfasst, die zumindest ein Sperrelement (114a; 114b) aufweist, das in Abhängigkeit von einer Position des Sperrelements (114a; 114b) eine Schalterbetätigung verhindert.

## Claims

1. Gardening machine, in particular lawn mower, having at least one switch unit (14a; 14b) which comprises at least one electric switch (16a; 16b), and having at least one actuating unit (18a; 18b) which comprises at least one movably mounted actuating element (20a; 20b) for generating an actuating force for actuating the switch (16a; 16b), wherein the actuating unit (18a; 18b) comprises at least one cam mechanism unit (22a; 22b) by means of which a movement of the actuating element (20a; 20b) is usable to actuate the switch (16a; 16b), **characterized in that** the actuating element (20a; 20b), along its axis of rotation (90a, 90b), surrounds the at least one electric switch (16a; 16b) in a sleeve-like manner.

2. Gardening machine according to Claim 1, **characterized in that** the cam mechanism unit (22a; 22b) comprises at least one cam mechanism element (24a) which is arranged on the actuating element (20a; 20b).

3. Gardening machine according to Claim 2, **characterized in that** the cam mechanism element (24a) is in the form of a cam track which is formed integrally with the actuating element (20a; 20b) .

4. Gardening machine according to Claim 2 or 3, **characterized in that** the cam mechanism unit (22a; 22b) comprises at least one further cam mechanism element (26a) which is movable in translation by means of the cam mechanism element (24a) in order to actuate the switch (16a; 16b).

5. Gardening machine according to Claim 4, **characterized in that** the further cam mechanism element (26a) is mounted so as to be movable in translation along a movement axis which is mounted so as to be movable at least substantially transversely, in particular at least substantially perpendicularly, to the axis of rotation (90a, 90b) of the actuating element (20a, 20b).

6. Gardening machine according to one of the preceding claims, **characterized in that** the actuating unit (18a; 18b) comprises at least one switch actuating element (28a) for actuating a switching contact element (30a) of the switch (16a; 16b), said switching contact element (30a) being mounted so as to be movable on a further cam mechanism element (26a) of the cam mechanism unit (22a; 22b).

7. Gardening machine according to one of the preceding claims, **characterized in that** the actuating unit (18a; 18b) comprises at least one overload prevention unit (32a; 32b) by means of which at least any excess pressing of a switching contact element (30a) of the switch (16a; 16b) is avoidable, wherein the overload prevention unit (32a) comprises at least one spring element (34a) for at least partially compensating for an actuating force that is able to be generated by means of a movement of the actuating element (20a; 20b) .

8. Gardening machine according to one of the preceding claims, **characterized in that** the actuating unit (18a; 18b) comprises at least one blocking unit (36a; 36b) which has at least one blocking element (114a; 114b) which prevents any switch actuation depending on a position of the blocking element (114a; 114b).

## Revendications

1. Machine de travail pour le jardin, en particulier tondeuse à gazon, comprenant au moins une unité de commutation (14a ; 14b) qui comprend au moins un commutateur électrique (16a ; 16b) et au moins une unité d'actionnement (18a ; 18b) qui comprend au moins un élément d'actionnement (20a ; 20b) supporté de manière déplaçable et destiné à générer une force d'actionnement en vue d'un actionnement du commutateur (16a ; 16b), l'unité d'actionnement (18a ; 18b) comprenant au moins une unité de transmission par came (22a ; 22b) au moyen de laquelle un déplacement de l'élément d'actionnement (20a ; 20b) peut être utilisé pour un actionnement du commutateur (16a ; 16b), **caractérisée en ce que** l'élément d'actionnement (20a ; 20b) entoure en forme de douille l'au moins un commutateur électrique (16a ; 16b) le long de son axe de rotation (90a, 90b).

2. Machine de travail pour le jardin selon la revendication 1, **caractérisée en ce que** l'unité de transmission par came (22a ; 22b) comprend au moins un élément de transmission par came (24a) qui est disposé sur l'élément d'actionnement (20a ; 20b).

3. Machine de travail pour le jardin selon la revendication 2, **caractérisée en ce que** l'élément de transmission par came (24a) est réalisé sous forme de trajectoire courbe qui est réalisée d'une seule pièce avec l'élément d'actionnement (20a ; 20b).

4. Machine de travail pour le jardin selon la revendication 2 ou 3, **caractérisée en ce que** l'unité de transmission par came (22a ; 22b) comprend au moins un élément de transmission par came supplémentaire (26a) qui peut être déplacé en translation en vue d'un actionnement du commutateur (16a ; 16b) au moyen de l'élément de transmission par came (24a).

5. Machine de travail pour le jardin selon la revendication 4, **caractérisée en ce que** l'élément de transmission par came supplémentaire (26a) est supporté de manière déplaçable en translation le long d'un axe de déplacement qui est supporté de manière déplaçable au moins essentiellement transversalement, en particulier au moins essentiellement perpendiculairement, par rapport à l'axe de rotation (90a, 90b) de l'élément d'actionnement (20a, 20b).

6. Machine de travail pour le jardin selon l'une quelconque des revendications précédentes, **caractérisée en ce que** l'unité d'actionnement (18a ; 18b) comprend au moins un élément d'actionnement de commutateur (28a) en vue d'un actionnement d'un élément de contact de commutation (30a) du commutateur (16a ; 16b), qui est supporté de manière déplaçable sur un élément de transmission par came supplémentaire (26a) de l'unité de transmission par came (22a ; 22b).

7. Machine de travail pour le jardin selon l'une quelconque des revendications précédentes, **caractérisée en ce que** l'unité d'actionnement (18a ; 18b) comprend au moins une unité de prévention des surcharges (32a ; 32b) au moyen de laquelle on peut éviter au moins une surpression d'un élément de contact de commutation (30a) du commutateur (16a ; 16b), l'unité de prévention des surcharges (32a) comprenant au moins un élément de ressort (34a) en vue d'une compensation au moins partielle d'une force d'actionnement pouvant être générée au moyen d'un déplacement de l'élément d'actionnement (20a ; 20b).

8. Machine de travail pour le jardin selon l'une quelconque des revendications précédentes, **caractérisée en ce que** l'unité d'actionnement (18a ; 18b) comprend au moins une unité de blocage (36a ; 36b) qui présente au moins un élément de blocage (114a ; 114b) qui, en fonction d'une position de l'élément de blocage (114a ; 114b), empêche un actionnement du commutateur.
